**Europäisches Patentamt**

**European Patent Office**

**Office européen des brevets**

(19)

(11) Publication number: **0 064 083**
**A1**

(12) # EUROPEAN PATENT APPLICATION

published in accordance with Art. 158(3) EPC

(21) Application number: **81903063.6**

(22) Date of filing: **11.11.81**

Data of the international application taken as a basis:

(86) International application number:
**PCT/JP81/00326**

(87) International publication number:
**WO82/01676** (27.05.82. 82`14)

(51) Int. Cl.³: **B 22 D 11/126**
**B 23 D 1/22, B 23 K 7/10**

(30) Priority: 11.11.80 JP 161319/80 U
18.11.80 JP 165141/80 U
29.05.81 JP 81162/81

(43) Date of publication of application:
10.11.82 Bulletin 82/45

(84) Designated Contracting States:
DE FR GB SE

(71) Applicant: **KAWASAKI STEEL CORPORATION**
1-28, Kitahonmachi-dori 1-Chome
Chuo-ku, Kobe-Shi Hyogo 651(JP)

(72) Inventor: SAITO, Sadayuki
257-14, Warabi Yotsukaidocho
Inba-gun Chiba, 284(JP)

(72) Inventor: FUKUNAGA, Ichiro
1-19-4, Chishirodainishi Chiba-shi
Chiba, 280(JP)

(72) Inventor: ITO, Susumu
2-20-6, Minamicho Chiba-shi
Chiba, 280(JP)

(72) Inventor: NAKAMURA, Katsumi
1-808-52, Hondacho Chiba-shi
Chiba, 280-02(JP)

(72) Inventor: HIGUCHI, Kazuya
2-17-3, Wakamiya Ichihara-shi
Chiba, 290(JP)

(74) Representative: Pendlebury, Anthony et al,
Page, White & Farrer 27 Chancery Lane
London WC2A 1NT(GB)

(54) DEVICE FOR REMOVING SLAG FROM MELT-CUT PIECE OF STEEL.

(57) A device for removing slag from a meltcut piece of steel in which a cutting tool mounting base whose elevational and rotational movements are controlled is laterally installed perpendicular to and on the underside of a roller table for conveying a steel piece cut to a predetermined length by melt-cutting, and tools for cutting off the slag from melt-cutting are provided in the longitudinal direction of the outer surface of the base at at least a position symmetrical to the base. The cutting tool is composed of a plurality of cutting blades sequentially arranged from the front center at the input side of the steel piece to both sides of the rear. The cutting blades are so arranged that the levels they project gradually raise toward the rear, and the blades are elastically held by springs. A device for removing melt-cutting slag from a steel piece of another embodiment has L-shaped cutting blades disposed at the top at the front center on the input side of a steel piece are longitudinally arranged at a predetermined interval on a cutting tool mounting base elevationally movably installed in the vicinity of the lower surface of the steel piece so as to cut and remove the slag adhering to the lower surface of the melt-cut steel piece in a predetermined length on a conveying roller table, and at least the rear cutting blades are held via springs mounted at the in lower positions on the base, and the cutting blades are so arranged that the levels the rear blades project are slightly higher than the cutting blades of the front cutting tools. When a water cooler for cooling the drooling part of the slag is provided at each of the front and the rear of the removing device to cut the drooling part thus hardened, the fused slag can be further effectively removed.

EP 0 064 083 A1

FIG.2

**TITLE MODIFIED**
see front page

S p e c i f i c a t i o n

## DEVICE FOR REMOVING FUSED SLAGS ON SLABS

### TECHNICAL FIELD

The present invention relates to a device for cutting off and removing fused slags deposited on the undersurface of a slab produced in the case where strip steel stocks shaped by means of continuous casting facilities and the like are fusion-cut to prepare a slab of a prescribed length by the use of a torch.

### TECHNICAL BACKGROUND

For example, belt-shaped steel stock produced by means of continuous casting facilities are usually fusion-cut to obtain a slab having a prescribed length. In this case, fused slags produced at the time of fusion-cutting are deposited on the undersurface of the slab so that so-called torch dross is formed on such slab.

If a slab on which fused slags being so-called torch dross are deposited is subjected to hot rolling as it stands, there arise intrusive flaws by means of rolling rollers, lamination flaws on the surface of rolled products and the like, and therefore it is required to remove such fused slags in the transferring process of the slabs.

As conventional devices for removing such fused slags as mentioned above, there is proposed a device in which at the lower part being an optional position between rollers of a
roller table for transferring a slab of a prescribed
length, a tool rest being vertically moved by means of a fluid
pressure cylinder is disposed perpendicularly to the aforesaid
transferring roller table, and cutters for cutting out fused
slags on the slab are placed on the aforesaid tool rest.

However, in such a conventional device, there arises
such a case where fused slags cut out and removed by means of
a cutter deposit on the share point of the cutter and when it is
intended to cut out and remove fused slags again, the cutter
does not completely contact with a slab so that fused slags
cannot completely be cut out and removed.

Such a phenomenon is liable to arise in the case where
fused slags on a slab of a high temperature, particularly a
slab having a surface temperature of more than 500°C is cut
out and removed.

In general, a scale layer has been formed on the surface
of a slab , and such scales are peeled off and deposited in
and around a cutter at the time of cutting out and removing
fused slags so that there is also a case where such cutter comes
to incompletely contact with a slab to be processed similarly
to the case as described above.

On one hand, cutting-out and removing operations for
fused slags as mentioned above are carried out usually in a
period of one slab per 1 - 2 minutes, though it varies
dependent upon a pouring rate of slabs so that a contacting period of time of a cutter with a high temperature  slab  is
20% or more when calculated in terms of calendar ratio.

Thus, life of a cutter is shortened due to thermal
fatigue underwent at such occasion as mentioned above, and in
this respect, it is necessary to exchange cutters with a period
of once or more per every week in conventional devices.

Accordingly, it is an object of the present first
invention to eliminate such disadvantages or to solve such
problems as mentioned in the above conventional art, and further
to provide a device for removing fused slags on  slabs  wherein
cutters are always kept clean to make them very favourable in
contact with a  slab  to be processed, whereby fused slags can
completely be cut out and removed and at the same time, a
prolongation of life of cutters can also be intended.

Namely, according to the present first invention,
there is proposed a device for removing fused slags on slabs
wherein at the lower part being an optional position between
rollers of a roller table for transferring a  slab of
a prescribed length, a roll-form cutter mount being vertically
moved and rotatively controlled is transversely carried perpendicu
larly to the aforesaid transferring roller table, and cutters
for cutting out fused slags on the aforesaid  slab  are disposed
on the outer surfaces of the aforesaid cutter mount being in
at least symmetrical positions along the longitudinal direction
thereof.

In the above construction, it is preferable to positively

- 3 -

restrict a position of the roll-form cutter mount at the time. of cutting out fused slags by providing a constraint means for restricting rotation of the cutter mount at the time of cutting out the fused slags and engaging with the outer surfaces of the opposite ends of the aforesaid cutter mount at a raised position thereof.

Furthermore a device for removing fused slags in which a method for cutting out fused slags by the use of conventional cutters is adopted is constructed in such a way, for example, as described in Japanese Utility Model Laid-open No. 64139/1979, that respective cutters are divergently placed on from the front center to the rear opposite sides of a tool rest being vertically movable by means of a fluid pressure cylinder with each required angle with respect to the advancing direction as well as with each required spacing, at the same time these cutters are divergently arranged towards the rear of the tool rest so as to lap over an end portion of each cutter with that of the cutter adjacent thereto, and projection levels of the respective cutters are gradually lowered from the cutter disposed on the central part of the tool rest towards the cutters disposed on divergent opposite sides of the tool rest.

However the device as set forth above has such a disadvantage in that since the respective cutters are arranged as mentioned above, if end portions of a  slab  to be processed are warped widthwise, fused slags on the warped portions cannot sufficiently be cut out. Besides there is also such a disadvantage

- 4 -

in that at the time when a cutter abuts against a slab to be processed, large impact force is applied to the cutter so that life of such cutter is shortened.

Accordingly, an object of the present second invention is to provide a device for removing fused dross by which disadvantages involved in the conventional art as mentioned above, can be eliminated, and it becomes there is not such a case where a slab is cut out in the same instance over the whole area along the width direction thereof, but the slab is successively cut out with the every parts thereof in accordance with an angle of sweepback of cutters, thereby to reduce the impulsive force which acts on the cutters so that the life thereof can be prolonged, besides in the case where a slab is warped widthwise, fused slags can smoothly and positively be cut out successively over the whole area along the width direction of the slab in a step-by-step manner.

The present second invention is characterized in that a plurality of cutters are successively arranged with a required spacing on a tool rest being vertically movable in such that they diverge from the front center being the inlet side for a slab towards the rear opposite sides of the aforesaid tool rest, each projection level of the cutters is made to be gradually higher as they proceed towards the rear part of the tool rest, and at the same time, at least a cutter arranged at the rear part of the tool rest is attached thereto in a verticall: variable manner by means of a spring.

Namely, in accordance with a mode of the present second invention, there is proposed a device for removing fused slags on slabs wherein each projection level of cutters successively arranged on a tool rest being vertically movable in such that they diverge from the front center being the inlet side for a slab towards the rear opposite sides of the aforesaid tool rest is made to be gradually higher as they proceed towards the rear part of the tool rest, and at the same time each cutter is maintained in a vertically variable manner by means of a spring installed on the undersurface of the aforesaid tool rest in order to cut out the fused slags on the aforesaid slab in the transferring process of the slab of a prescribed length.

Furthermore, according to another mode of the present second invention, a device for removing fused slags on slabs is constructed in such that <-shaped cutters each shaping the front center thereof being the inlet side for a slab as the apex are disposed on the front and rear positions of a tool rest being vertically movable with a required spacing, respectively, at least the rear cutter is maintained through a spring mounted on the under side of the tool rest in a vertically variable manner, and at the same time the projection level of the share point in the aforesaid rear cutter is made to be somewhat higher than that of the front cutter in order to cut out the fused slags on the aforesaid slab in the transferring process of the slab of a prescribed length.

Moreover, in accordance with still another mode of the present second invention, a device for removing fused slags on slabs is constructed in such a way that a <-shaped stationary front cutter shaping the front center thereof being the inlet side for a slab as the apex, middle cutters each consisting of a cutter part installing a spring disposed with a required spacing from the aforesaid front cutter and lapping over with the front cutter and each stationary cutter part placed adjacent to the outside of said cutter part installing a spring, and rear cutters each consisting of a cutter part installing a spring disposed similarly to that of the aforesaid middle cutters and lapping over with the stationary cutter part positioned before the aforesaid cutter part one another and each stationary cutter part placed adjacent to the outside of the aforesaid cutter part installing a spring are provided on a tool rest being vertically movable, respectively, and each projection level of the share point in a cutter part installing a spring is made to be somewhat higher than that of each stationary cutter part positioned before the very cutter part in order to cut out the fused slags on the aforesaid slab in the transferring process of the slab of a prescribed length.

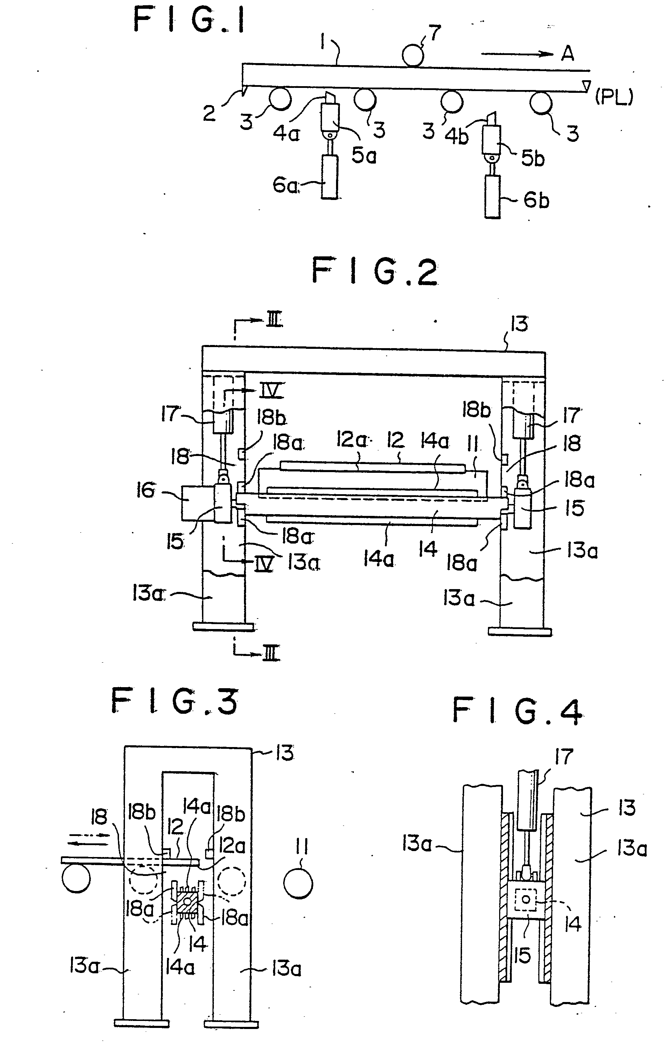

On one hand, heretofore, removal of fused dross of a continuously cast slab or the like after cutting off the same has usually been carried out by a manner as illustrated in Fig. 1. Namely, Fig. 1 is an explanatory view illustrating a method for removing fused dross according to a conventional example in which a slab 1 after it was cut off is transferred on a transferring table consisting of a plurality of table rollers 3 in a direction indicated by an arrow A as shown in Fig. 1. On the undersurface in a cut-off part of the slab 1, fused dross 2 has been deposited, and for the sake of removing such fused dross, cutters 4 for removing fused dross are provided usually below the path line (pL) in a vertically movable manner. And when the slab 1 on which the fused dross 2 is deposited is transferred to a prescribed position, the cutter 4 for removing fused dross is raised simultaneously with a cutter pedestal 5 by means of a cylinder 6 to urge and abut the cutter 4 for removing fused dross upon the undersurface of the slab 1, whilst a pinch roll 7 contacts with the surface of the slab 1 so that the fused dross 2 is shared and removed. After completion of sharing and removing of the fused dross, the cutter 4 for removing fused dross is descended by means of the cylinder 6 and the cutter 4 returns to a position below the path line (pL). In Fig. 1, it is to be noted that two removal means for fused dross are provided, since the fused dross is deposited on the undersurface in both the front and rear ends of a slab. However, in the case where fused dross is removed by such a manner as described above, since a surface temperature of the slab 1 in the end face thereof at the time of removing the fused dross is generally high temperatures such as 700°C and higher, the fused dross cannot completely be removed due to tack resistance or the like of the slab. Furthermore, when

- 8 -

the removal of fused dross is incomplete, the unremoved portion is transferred to the following step as it is so that when such slab  is rolled in the step to obtain a product, the aforesaid unremoved portion remains as flaws on the product.  Therefore such defective parts are ordinarily cut off and removed, as a result, there arise such problems as dropping of the yield and the like.  Under the circumstances, existence of such fused dross is generally detected in a transferring step of slabs so that if an unremoved portion is found, removal of the fused dross is again carried out in accordance with any manner before such  slab  is rolled.

As mentioned above, in a conventional example, fused dross of a  slab  has been subjected to a removal process of fused dross during presence of the surface of the  slab  within a high temperature region so that the fused dross could not have completely been removed.  For this reason, it has been required to detect existence of fused dross in the transferring process of slabs.  Moreover processes for handling slabs have confused according to occurrence in frequency of rejected product.

Accordingly, an object of the present third invention is to eliminate the disadvantages as described above, and specifically to provide a method for removing fused dross on slabs  as well as the device therefor in which a deposited portion of the fused dross has previously been water-cooled and then, the fused dross is easily and completely removed,

- 9 -

hence unlike conventional examples there is no need of any detection for existence of fused dross in its transferring step, besides it results in reduction of a frequency of occurrence of flaws on the products after such slabs were rolled.

Namely, the present third invention is characterized by subjecting a slab such as a continuously cast slab or the like to continuous gas cutting on a hot slab transferring table, thereafter water-cooling a deposited portion of the fused dross on the undersurface of the aforesaid slab in the cut-off portion thereof, adjusting a temperature at the end face of the aforesaid slab in the aforesaid deposited portion of the fused dross to 650°C or less, and then sharing and removing the aforesaid dross.

Furthermore the present third invention is characterized, as another mode thereof, in that a gas cutting means for subjecting a slab such as a continuously cast slab or the like to continuous gas cutting on a hot slab transferring table line is followed by a sharing and removing means of fused dross for cutting out the fused dross deposited on the undersurface of the aforesaid slab in the cut-off portion thereof, and water-cooling means for water-cooling the aforesaid deposited portion of the fused dross on the aforesaid slab are disposed before and behind the aforesaid sharing and removing means of fused dross, respectively, whereby the aforesaid device is arranged in such that the aforesaid fused dross is shared and removed by means of the aforesaid sharing and removing means.

- 10 -

DISCLOSURE OF THE INVENTION

That is, according to the present first invention, there is proposed a device for removing fused slags on slabs wherein at the lower part being an optional position between rollers of a roller table for transferring a slab of a prescribed length, a roll-form cutter mount being vertically moved and rotatively controlled is transversely carried perpendicularly to the aforesaid transferring roller table, and cutters for cutting out fused slags on the aforesaid slab are disposed on the outer surfaces of the aforesaid cutter mount being in at least symmetrical positions along the longitudinal direction thereof.

In the above construction, it is preferable to positively restrict a position of the roll-form cutter mount at the time of cutting out fused slags by providing a constraint means for restricting rotation of the cutter mount at the time of cutting out the fused slags and engaging with the outer surfaces of the opposite ends of the aforesaid cutter mount at a raised position thereof.

The present second invention is characterized in that a plurality of cutters are successively arranged with a required spacing on a tool rest being vertically movable in such that they diverge from the front center being the inlet side for a slab towards the rear opposite sides of the aforesaid tool rest, each projection level of the cutters is made to be gradually higher as they proceed towards the rear part of the

- 11 -

tool rest, and at the same time at least a cutter arranged at
the rear part of the tool rest is attached thereto in a
vertically variable manner by means of a spring.

Namely, in accordance with a mode of the present second
invention, there is proposed a device for removing fused slags
on slabs wherein each projection level of cutters successively
arranged on a tool rest being vertically movable in such that
they diverge from the front center being the inlet side for a
slab towards the rear opposite sides of the aforesaid tool
rest is made to be gradually higher as they proceed towards the
rear part of the tool rest, and at the same time each cutter is
maintained in a vertically variable manner by means of a spring
installed on the undersurface of the aforesaid tool rest in
order to cut out the fused slags on the aforesaid slab in
the transferring process of the slab of a prescribed length.

Furthermore, according to another mode of the present
second invention, a device for removing fused slags on slabs
is constructed in such that ⟨-shaped cutters each shaping the
front center thereof being the inlet side for a slab as the
apex are disposed on the front and rear positions of a tool
rest being vertically movable with a required spacing, respectively, at least the rear cutter is maintained through a spring
mounted on the under side of the tool rest in a vertically
variable manner, and at the same time the projection level of
the share point in the aforesaid rear cutter is made to be somewhat higher than that of the front cutter in order to cut out the fused slags on the aforesaid slab in the transferring process of the slab of a prescribed length.

Moreover, in accordance with still another mode of the present second invention, a device for removing fused slags on slabs is constructed in such a way that a ⟨ -shaped stationary front cutter shaping the front center thereof being the inlet side for a slab as the apex, middle cutters each consisting of a cutter part installing a spring disposed with a required spacing from the aforesaid front cutter and lapping over with the front cutter and each stationary cutter part placed adjacent to the outside of the aforesaid cutter part installing a spring, and rear cutters each consisting of a cutter part installing a spring disposed similarly to that of the aforesaid middle cutters and lapping over with the stationary cutter part positioned before the aforesaid cutter part one another and each stationary cutter part placed adjacent to the outside of the aforesaid cutter part installing a spring are provided on a tool rest being vertically movable, respectively, and each projection level of the share point in a cutter part installing a spring is made to be somewhat higher than that of each stationary cutter part positioned before the very cutter part in order to cut out the fused slags on the aforesaid slab in the transferring process of the slab of a prescribed length.

In addition, the present third invention relates to

- 13 -

a method for removing fused dross on slabs characterized by subjecting a slab such as a continuously cast slab or the like to continuous gas cutting on a hot slab transferring table, thereafter water-cooling a deposited portion of the fused dross on the undersurface of the aforesaid slab in the cut-off portion thereof, adjusting a temperature at the end face of the aforesaid slab in the aforesaid deposited portion of the fused dross to 650°C or less, and then sharing and removing the aforesaid dross.

Besides, the present third invention relates also to a device for practising the method as set forth above, i.e., a device for removing fused dross on slabs characterized in that a gas cutting means for subjecting a slab such as a continuously cast slab or the like to continuous gas cutting on a hot slab transferring table line is followed by a sharing and removing means of fused dross for cutting out the fused dross deposited on the undersurface of the aforesaid slab in the cut-off portion thereof, and water-cooling means for water-cooling the aforesaid deposited portion of the fused dross on the aforesaid slab are disposed before and behind the aforesaid sharing and removing means of fused dross, respectively, whereby the aforesaid device is arranged in such that the aforesaid fused dross is shared and removed by means of the aforesaid sharing and removing means.

BRIEF DESCRIPTION OF THE DRAWINGS

In the accompanying drawings, Fig. 1 is an explanatory view illustrating a method for removing fused dross according to a conventional example to which the present third invention has not yet been applied as mentioned above, Figs. 2 - 9 are views illustrating examples of the present first invention, respectively, Figs. 10 - 20 are views illustrating examples of the present second invention, respectively, and Figs. 21 - 27 are views illustrating the present third invention, respectively.

In these views, Fig. 2 is a front view, with parts broken away, showing an example of the present first invention;

Fig. 3 is a sectional view taken along line III - III in Fig. 2;

Fig. 4 is a sectional view taken along line IV - IV in Fig. 2;

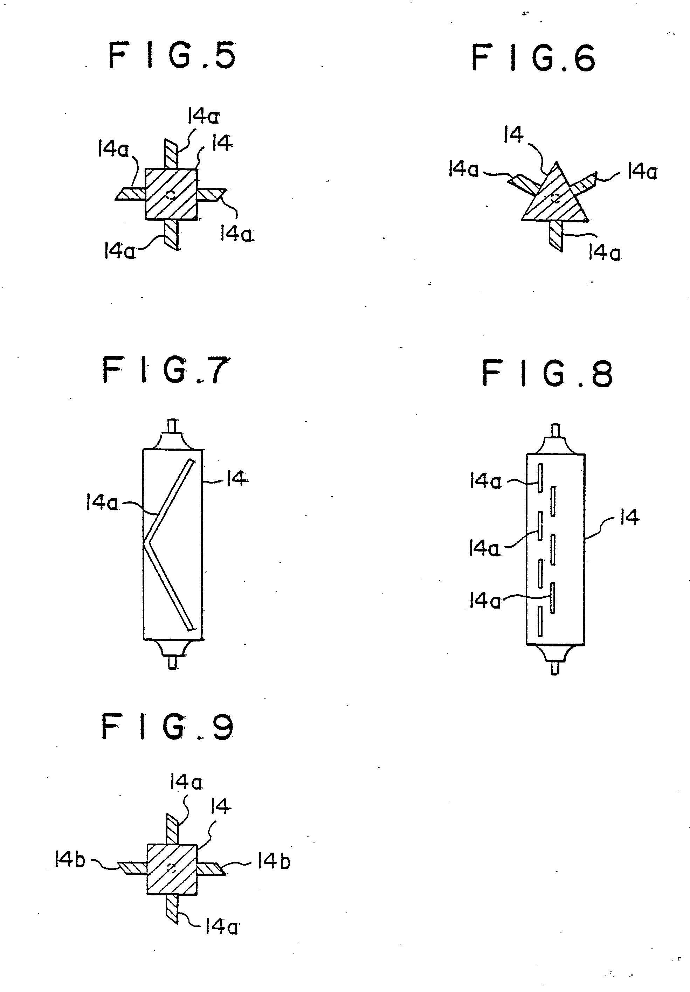

Figs. 5 and 6 are sectional view each showing a profile of a tool rest as well as an example in installation of cutters;

Figs. 7 and 8 are planar views each showing an example in an arrangement of a cutter or cutters on the surface of a tool rest;

Fig. 9 is a sectional view showing an example in which cutters having different directions in their share points from one another are installed on a tool rest;

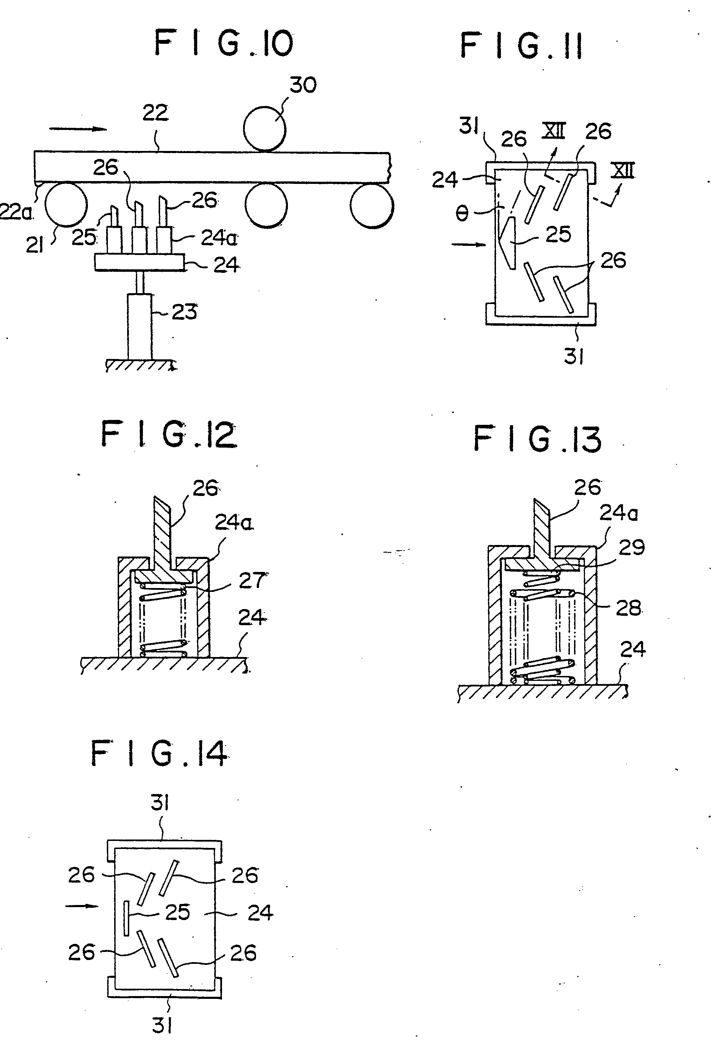

Fig. 10 is a schematic side view illustrating an example of the present second invention;

Fig. 11 is a schematic planar view showing an arrangement of cutters in a tool rest;

Fig. 12 is an enlarged sectional view, taken along line XII - XII of Fig. 11, showing details of a cutter holder;

Fig. 13 is a sectional view showing another example of the cutter holder;

Fig. 14 is a schematic planar view showing another arrangement of cutters in a tool rest;

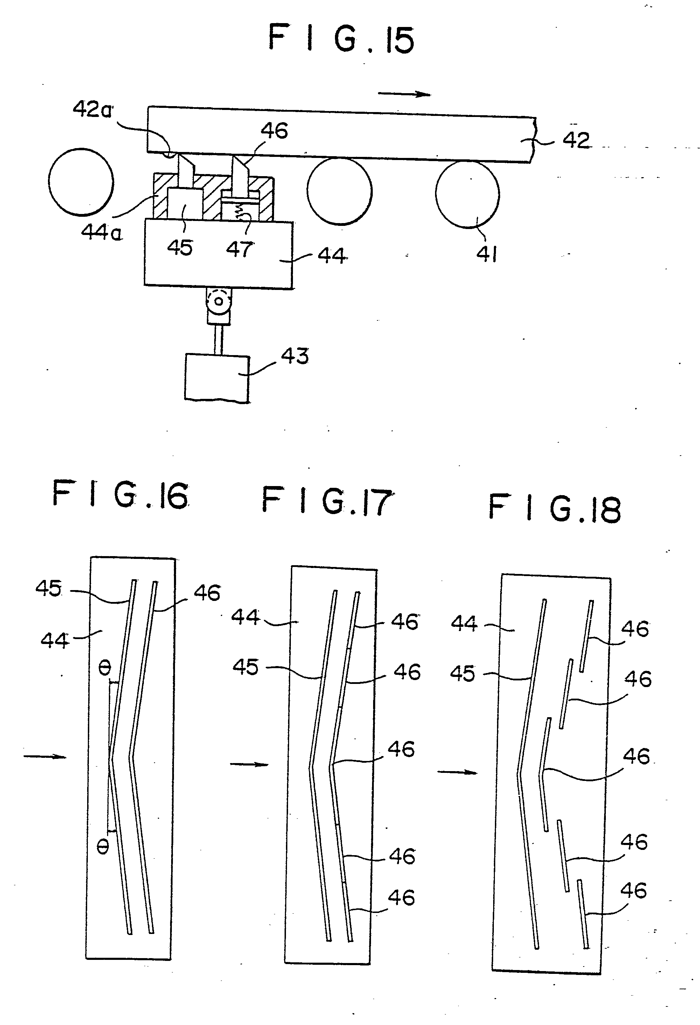

Fig. 15 is a schematic side view showing another mode of the present second invention;

Fig. 16 is a schematic planar view showing an arrangement of cutters in a tool rest;

Figs. 17 and 18 are schematic planar views each showing another example in an arrangement of cutters in a tool rest;

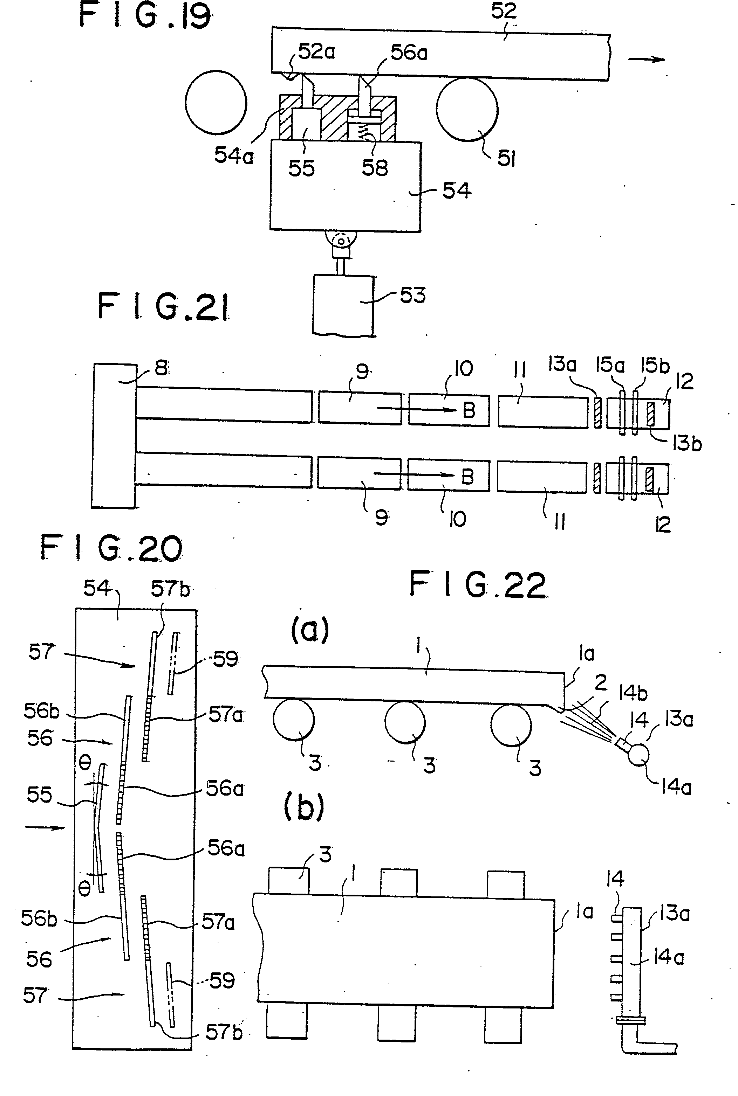

Fig. 19 is a schematic side view illustrating still another mode of the present second invention;

Fig. 20 is a schematic planar view showing an arrangement of cutters in a tool rest;

Fig. 21 is a schematic layout showing an example of a device for practicing the present third invention;

Figs. 22(a) and 22(b) are side and planar views showing an example of a water-cooling device;

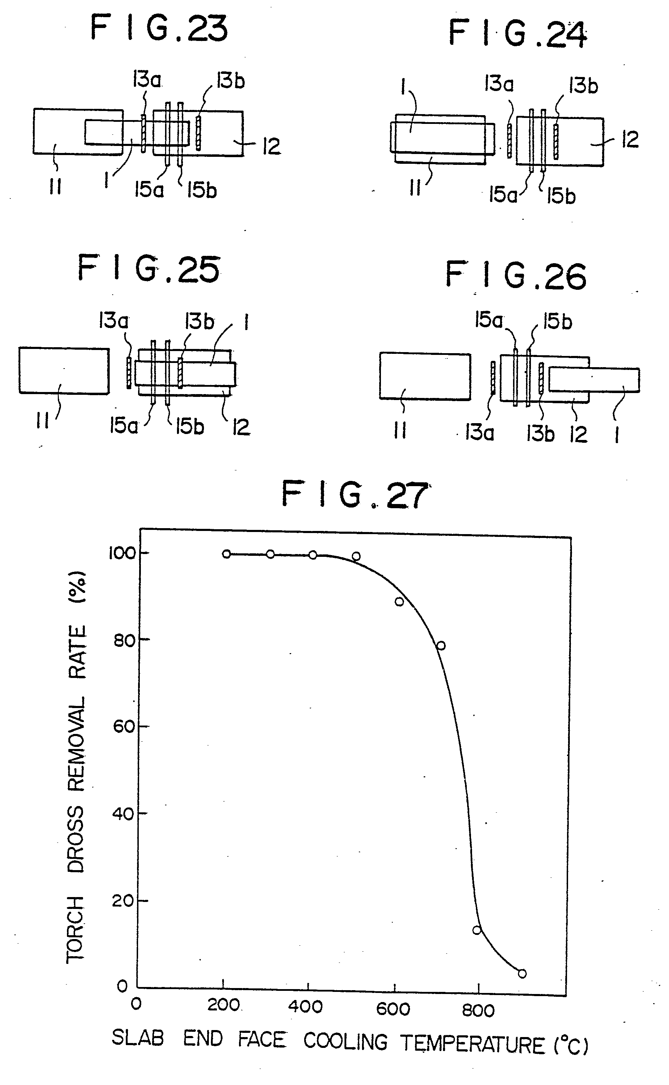

Figs. 23, 24, 25 and 26 are explanatory views illustrating respective processes in case of removing fused dross according to the present third invention; and

Fig. 27 is a graphical representation illustrating a relationship between a temperature in a slab end face and a dross removal rate.

THE MOST PREFERRED MODES FOR EMBODYING THE INVENTION

The embodiments of the present invention will be
described hereinbelow by referring to the accompanying drawings
in which Figs. 1 - 9 illustrate the embodiments of the present
first invention, respectively.

In Figs. 2 through 4, reference numeral 11 designates
a roller table for transferring a slab 12 of a prescribed
length to, for instance, a heating oven, and at an optional
position between the rollers of the roller table 11, a gate
trestle 13 is provided astride the roller table 11.

Between studs 13a positioned on the front and rear of
the gate trestle 13 on both sides thereof, a roll-form cutter
mount 14 is transversely carried by means of bearings 15 in a
rotatable manner in such that the cutter mount crosses at right
angles with respect to the roller table 11 and is positioned
below a region defined between the rollers.

On the outer surfaces of the cutter mount 14 being in
symmetrical positions having an angle of at least 180°, cutters
14a for cutting out a fused slag 12a of the slab 12 are
removably disposed along the longitudinal direction of the
cutter mount.

The aforesaid cutter mount 14 is arranged in such that
it is rotatively controlled at an angle of, for example, 180° by
means of a rotary driving means 16 of, for instance, fluid
pressure or motor-driven type and the like type, and the cutters
14a placed on symmetrical positions at 180° with each other are alternately utilized to cut out the fused slag 12a.

Furthermore the respective bearings 15 of the aforesaid cutter mount 14 are provided in a vertically movable manner between the respective front and rear studs 13a of the aforesaid gate trestle 13, and these bearings are arranged so as to be vertically controlled by means of a fluid pressure cylinder 17, whereby the cutter mount 14 is vertically moved.

Namely, a share point of the cutter 14a is projected to a path line of the slab 12 due to a rise of the cutter mount 14 to effect cutting-out of the fused slag 12a, and after cutting out the fused slag 12a, the cutter mount 14 is lowered to position the share point of the cutter 14a below the path line. Hence, in order to cut out a fused slag 12a in the following slab 12, the cutter mount 14 is rotatively controlled by means of the aforesaid rotary driving means 16 to position another cutter 14a being symmetrically positioned with respect to the former cutter 14a in the upper part of the cutter mount, and the cutter mount 14 is elevatingly controlled again by means of the fluid pressure cylinder 17.

Further, there is provided a constraint means 18 for restricting rotation of the cutter mount 14 at the time of cutting out the fused slag 12a and which makes the outer surfaces of the opposite ends of the cutter mount 14 engaged with the respective studs 13a of the gate trestle 13 at the time when the aforesaid cutter mount 14 came to be in its raised position.

Such rotation constraint means 18 may be composed, as shown in Fig. 3, of stoppers 18a disposed on the respective outer surfaces of the opposite end portions of the cutter mount 14 and stopper brackets 18b placed on the respective studs 13a.

As other examples for such rotation constraint means of the aforesaid cutter mount 14, a brake of fluid pressure or electromagnetic type or the like may be considered, but since the impulsive force at the time of cutting out a fused slag is high, a considerably large brake means is required. Accordingly the most preferable is the rotation constraint means 18 consisting of the stoppers 18 and the stopper brackets 18b which has the simplest construction and can be withstood against high impulsive force.

Moreover a cross-sectional profile of the aforesaid cutter mount 14 may be a round shape, but a quadrilateral shape is more preferable in order to make the cutters 14a easily attachable to the cutter mount as shown in Fig. 3.

In addition, either cutters 14a may be disposed on the outer faces of the every sides along the longitudinal direction of the cutter mount 14 having a square section, respectively, as shown in Fig. 5, or cutters 14a may be disposed on the outer faces of the every sides along the longitudinal direction of the cutter mount 14 having an equilateral triangular section, respectively, as shown in Fig. 6.

Besides, the respective cutters 14a may be incorporated in a single cutter corresponding to a width of the slab 12 as shown in Fig. 7, but it is more preferable that divided cutter portions are arranged on the outer surface of the cutter mount 14 along the longitudinal direction thereof, respectively, so as to correspond to a width of the slab 12 as shown in Fig. 8 without incorporating respective cutters in a single long cutter, because impulsive force against the cutter(s) 14a can be reduced.

In general, the cutter mounts 14 each provided with the aforesaid cutters 14a are disposed on the front and rear positions in the advancing direction of the slab 12 symmetrically to each other with a required spacing in order that the roller table 11 for transferring the slab 12 is rotated and controlled in normal and reverse directions of the roller table to reciprocate the slab 12 along the directions indicated by a solid line arrow and a dot and dash line arrow in Fig. 3 in case of cutting out and removing fused slags, whereby the fused slags 12a deposited on the undersurface of the slab 12 at the opposite ends thereof can be cut out and removed. However, for instance, when respective cutters 14b each having a share point of an inverse profile with respect to that of the respective cutters 14a being disposed on the outer faces at such positions, being symmetrical with each other at an angle of 180°, of the cutter mount 14 having a square section along a longitudinal direction thereof are placed on the outer faces of the cutter mount 14 along another longitudinal direction being perpendicular to the former longitudinal direction at such positions in which the aforesaid cutters 14b are symmetrically disposed with each other at an angle of 180°, respectively, as shown in Fig. 9, the removal of fused slags can be effected by a single device for removing fused slags. Therefore such arrangement as mentioned above is very desirable in view of saving in space for installation, costs for installation of equipment and the like.

In this case, it is necessary to provide the stopper brackets 18b engaging with the stoppers 18a disposed on the opposite side faces of both the end portions of the cutter mount 14 on the other respective studs 13a as indicated by dot and dash line in Fig. 3.

Furthermore, in case of examples shown in Figs. 5, 6 and 9, it is, of course, required that the rotation driving means 16 of the cutter mount 14 is suitably controlled so as to project either a desired cutter 14a or 14b to the path line.

In addition, it may be considered that, for instance, high-pressure water is jetted to the cutters 14a or 14b which have completed cutting-out of the fused slag 12a to remove adhesive fused slags, scales and the like.

In the present first invention, at the lower part being an arbitrary position between rollers of a roller table for transferring a slab of a prescribed length, a roll-form cutter mount being vertically moved and rotatively controlled is transversely carried perpendicularly to the aforesaid transferring roller table, cutters for cutting out fused slags on the  slab  are disposed on the outer surfaces
of the aforesaid cutter mount being in at least symmetrical
positions along the longitudinal direction thereof, and further
there is provided a constraint means for restricting rotation
of the aforesaid cutter mount at the time of cutting out the
fused slags and engaging with the outer surfaces of the opposite
ends of the aforesaid cutter mount at a raised position thereof.
According to such arrangement as stated above, when the cutter
mount is lowered and at the same time, rotated for replacing
a cutter which has completed cutting-out of a fused slag by
another fresh cutter, the fused slags, scales and the like
deposited on the cutter mount can be dropped to remove them.
Accordingly such cutters can always be maintained clean so that
each cutter can very favorably be contacted with a  slab ,
whereby the fused slag can completely be cut out and removed.

Furthermore since the respective cutters are alternately
utilized, the thermal fatigue thereof is reduced so that it can
contribute prolongation of a life to the cutters and at the same
time, even if either of the cutters is damaged, operations for
cutting out fused slags can be continued by means of another
cutter.  Thus, exchange of a cutter becomes unnecessary during
casting and accordingly, it can contribute elevation to the
productivity of slabs.

Moreover if respective cutters each having a share point
of an inverse profile with respect to that of another cutter
have been disposed on a cutter mount, it is not necessary to dispose divices for removing fused slags on the front and rear positions in the advancing direction of a slab symmetrically to each other with a required spacing, respectively, but the removal of fused slags can be effected by a single device for removing fused slags. Therefore such arrangement as set forth above can contribute saving to space for installation, costs for installation of equipment and the like.

In addition, since the present first invention is arranged in such that rotation of a cutter mount at the time of cutting out fused slags is restricted by a constraint means which engages with the outer surfaces of the opposite ends of the cutter mount at a raised position thereof, there is no need of utilizing and expensive brake means of a fluid pressure or electromagnetic type and the like, but a means of engaging type which has the simplest construction and can be withstood a large impulsive force may be utilized. Hence, the present first invention is not required for any special controlling means, but rotation of the cutter mount can positively be restricted and at the same time, costs for installation of equipment and the like can remarkably be saved in the present first invention.

Figs. 10 - 20 are views for illustrating embodiments in accordance with the present second invention in which Figs. 10 - 14 are views illustrating a mode of the present second invention, Figs. 15 - 18 are views illustrating another mode of the present second invention, and Figs. 19 and 20 are views illustrating still another mode of the present second invention,

respectively, by referring to some embodiments thereof.

In Fig. 10, reference numeral 31 designates a roller table for transferring a slab 32 fused with a prescribed length to, for instance, a hot mill, and at the lower part, being an optional position between the rollers, of the roller table 31, a tool rest 24 being moved vertically by means of a fluid pressure cylinder 23 is provided.

Furthermore, as shown also in Figs. 11 and 12, a cutter 25 having a <-shape in the plane with an angle θ of sweepback of, for example, around 3 - 10 degrees, preferably around 5 degrees is maintained at the front (the inlet side of the slab 22) center on the top of the aforesaid tool rest 24 in such that the share point of the cutter is placed with the face upward by means of a holder 24a secured to the tool rest 24.

On the top of the aforesaid tool rest 24, the cutter 25 positioned at the front center of the tool rest is placed as the forefront of cutters and from which cutters 26 viverge towards the rear opposite ends of the tool rest with a required spacing, respectively. These cutters 26 are arranged in such that each end portion of the cutters being adjacent to each other along the front and rear direction of the tool rest is lapped over with each other and at the same time, each cutter 26 is placed in substantially parallel to a side of the cutter 25 positioned at the front center of the tool rest in such that the share point of the cutter 26 is maintained with the face upward by means of each holder 24a.

The share points of the aforesaid cutters 25 and 26 are arranged, respectively, in such a way that as they proceed towards the rear part of the tool rest, a rear cutter is higher than the cutter just before it by, for example, every around ·3 – 5 mm.

Appropriate abutting force against the undersurface of the slab 22 is given to the cutters 25 and 26 maintained, respectively, in the holders 24a by means of a spring 27 installed in the lower part of each holder 24a so that even if the slab 22 is warped widthwise, it is possible to cut out the fused slag 22a on the undersurface of the slab 22.

Moreover, as another example of the present second invention, it is arranged, as shown in Fig. 13, in such that appropriate abutting force against the undersurface of the slab 22 is given to the cutters 25 and 26 maintained, respectively, in the aforesaid holders 24a by means of a spring 28 having a comparatively strong elasticity and placed at the lower part inside each holder 24a and another spring 29 having a comparatively weak elasticity and positioned at the upper part of the aforesaid spring 28, and further it may be arranged in such a way that the fused slag 22a on the undersurface of the slab 22 can be cut out by means of the strong spring 28.

In this case, it is preferable to arrange in such that a length of the spring 28 having a strong elasticity placed in the aforesaid respective holders 24a is made shorter as a height of the share point of a cutter becomes higher, whilst a length of a spring 29 with a weak elasticity is made longer as a height of the share point of a cutter comes to be higher so that when these cutters abut upon a slab 22 in the case where the slab 22 is in underdraft widthwise, large impulsive force applied to a cutter having a high share point is moderated by such arrangement as described above.

Furthermore it may be arranged in such that the cutter 25 of the front center is a direct blade similar to other cutters 26 and the cutter 25 is placed perpendicularly to the advancing direction of the slab 22 as shown in Fig. 14, and in addition the cutters 25 and 26 are utilized in a form of double blade, respectively.

Besides, when the fused slag 22a on the slab 22 is cut out by means of the respective cutters 25 and 26, there is a fear that the slab 22 comes up from the roller table 21 in case of a comparatively light slab 22, whilst there is such a fear that a position of the slab 22 varies if the slab 22 contacts unfavorably with the respective cutters 25 and 26. Accordingly, it is preferable to provide a suppressive roller 30 for the slab 22 as shown in Fig. 10 in order to prevent the fears as mentioned above.

In Figs. 11 and 14, reference numeral 31 designates a guide for vertically moving the tool rest 14.

The present second invention is constructed, as mentioned above, in such that in order to cut out fused slags on a slab in the transferring process of the slab of

- 26 -

a prescribed length, each projection level of respective cutters successively arranged in such that they diverge from the front center being the inlet side for slabs towards the rear opposite sides of a tool rest is made to be gradually higher as they proceed towards the rear part of the tool rest. Therefore, even if a slab is in upper draft along its width direction, fused slags extending over all the region in the width direction of the slab can uniformly and positively be cut out.

Moreover, since each cutter is held by means of a spring at the lower position with respect to a tool rest, suitable abutting force of each cutter can be given to a slab by means of the spring. For this reason, protection of each cutter as well as smooth cutting-out of fused slags can be effected, even if a slab to be processed is warped widthwise.

As a matter of course, the device according to the present second invention can also be applied to the case where scales on the top and bottom faces as well as both the side faces of a billet are removed. In this case, it may be arranged in such that two pairs of a tool rests each provided with the aforesaid respective cutters are placed opposite to one another on the top and bottom faces as well as both the side faces of the slabs, respectively.

Moreover, since a roller table for transferring slabs is rotated and controlled in normal and reverse direction of the roller table to reciprocate a slab in case of removing

fused slags or scales, the tool rests each provided with the aforesaid cutters are disposed on the front and rear positions in the advancing direction of the slab symmetrically to each other with a required spacing.

Figs. 15 - 18 are views illustrating various embodiments in another mode of the present second invention.

In Fig. 15, reference numeral 41 designates a roller table for transferring a slab 42 fused with a prescribed length to, for example, a hot mill, and at the lower part, being an optional position between the rollers, of the roller table 41, a tool rest 44 being moved vertically by means of a fluid pressure cylinder 43 is disposed perpendicularly to the roller table 41.

Furthermore, as shown also in Fig. 16, on the top of the aforesaid tool rest 44, a cutter 45 having, e.g., a < -shape section in the plane and being formed in such that the front (the inlet side of the slab 42) center thereof is the apex and which diverges continuously towards the opposite ends of the cutter with an angle θ of sweepback of, for instance, around 3 - 10 degrees, preferably around 5 degrees is fixed and held in such that the share point of the cutter is placed with the face upward by means of a holder 44a secured to the tool rest 44.

At the rear position (the outlet side position of the slab 42) of the aforesaid cutter 45, another cutter 46 having the same shape as that of the cutter 45 and being arranged to have a required spacing with respect to the cutter 45, preferably in parallel thereto is maintained in such that the share point of the cutter 46 is positioned with the face upward by means of the holder 44a. Moreover a suitable abutting force is given to maintain the cutter 46 with respect to the undersurface of the slab 42 by means of a spring 47 installed on the lower part of and inside the holder 44a.

The share point of the cutter 46 is set higher than that of the front cutter 45 in the projection level thereof by, for example, around 3 - 5 mm. Accordingly, when the slab 42 to be processed is warped in the width direction, these cutters are arranged in such that the share point of the rear cutter 46 abuts against the undersurface of the slab 42, whereby a fused slag 42a on the undersurface of the slab 42 can be cut out, even if the share point of the front cutter 45 does not abut against the bottom of the slab 42.

In addition, another spring may also be installed on the undersurface of the front cutter 45.

Furthermore it is preferable that the rear cutter 46 is divided into plural parts as shown in Fig. 17, and springs are installed on the bottoms of the so divided cutters 46, respectively, whereby these cutters are made to sufficiently cope with the widthwise or lengthwise warp of the slab 42. In this case it is desirable to make each projection level of the share point higher by several mm to every divided cutters 46 according as they direct to the outer positions thereof.

Besides, as an alternative example for dividing the

- 29 -

rear cutter 46, the divided cutters may be arranged in such
that they are successively shifted rearwardly from that
positioned innermost to those positioned outermost as shown
in Fig. 18.

As a matter of course, the device according to the
present invention can also be applied to the case where scales
on the top and bottom faces as well as both the side faces of
the slab 42 are removed. In this case, it may be arranged in
such that two pairs of the tool rests 44 each provided with the
cutters 45 and 46 are placed opposite to one another on the
top and bottom faces as well as both the side faces of the
slab 42, respectively.

Moreover, since the roller table 41 for transferring
the slab 42 is rotated and controlled in normal and reverse
directions of the roller table to reciprocate the slab 42
in case of removing fused slags or scales, the tool rests each
provided with the aforesaid cutters 45 and 46 are disposed on
the front and rear positions in the advancing direction of the
slab 42 symmetrically to each other with a required spacing.

In the mode as stated above, the device is composed
in such that in order to cut out fused slags on a slab in
the transferring process of the fused slab with a prescribed
length, <-shaped cutters each shaping the front center thereof
being the inlet side for a slab as the apex are disposed on
the front and rear positions of a tool rest being vertically
movable with a required spacing, respectively, at least the rear cutter is maintained at the lower position with respect to the tool rest through a spring, and at the same time the projection level of the share point in the rear cutter is made to be somewhat higher than that of the front cutter. Accordingly there is not such fear that fused slags extending over all the region in the width direction of the undersurface of the slab are cut out at the same time by means of both the cutters, but the slab can be successively cut out every parts in accordance with the angle of sweepback of the cutters. Therefore there is not such a case where a large impulsive force is applied to the cutters so that the life of the cutters can be prolonged.

Furthermore, in the case where a slab is warped widthwise, such fused slags which could not be cut out by means of the front cutter can smoothly and positively be cut out by means of the rear cutter.

Figs. 19 and 20 are views for illustrating still another mode of the present second invention, respectively.

In Fig. 19, reference numeral 51 designates a roller table for transferring a slab 52 of a prescribed length to, for example, a hot mill, and at the lower part, being an optional position between the rollers, of the roller table 51, a tool rest being moved vertically by means of a fluid pressure cylinder 53 is disposed perpendicularly to the roller table 51.

Furthermore, as shown also in Fig. 20, on the top of the aforesaid tool rest 54, a front cutter 55 having, e.g., a <-shape section in the plane and being formed in such that the front (the inlet side of the slab 52) center thereof is the apex and which diverges towards the opposite ends of the cutter with an angle θ of sweepback of, for instance, around 3 - 10 degrees, preferably around 5 degrees is fixed and held in such that the share point of the cutter is placed with the face upward by means of a holder 54a secured to the tool rest 54.

In addition, middle and rear cutters 56 and 57 being arranged so as to have a required spacing with respect to the aforesaid front center 55, preferably in parallel thereto, respectively, and which diverge successively towards the opposite ends of the front cutter in the rear direction thereof while these middle and rear cutters are overlapped each other are positioned with the face upward by means of the holder 54a.

Among the aforesaid middle and rear cutters 56 and 57, parts of cutters 56a and 57a lapping over with their own front cutters, respectively, are maintained by receiving a suitable abutting force in respect of the undersurface of the slab 52 by means of a spring 58 installed on the lower part of and inside the holder 54a, respectively.

In respect of the share points of the cutter parts 56a and 57a in the respective middle and rear cutters on which the spring 58 is installed, the share point of a cutter positioned before another cutter, e.g., the share point of the cutter part 56a is set higher than that of the front cutter 55 in the projection level thereof by, for instance, around 3 - 5 mm, and further the share point of the cutter part 57a is set higher than that of a stationary cutter part 56b of the cutter 56 in the projection level thereof by, for example, around 3 - 5 mm. Accordingly, when the slab 52 to be processed is warped widthwise, these cutters are arranged in such that the share points of the rear cutter parts 56a and 57a abut against the undersurface of the slab 52, whereby a fused slag 52a on the undersurface of the slab 52 can be cut out, even if the share point of the front cutter does not abut against the bottom of the slab 52.

As illustrated in Fig. 20 by means of dot and dash lines, cutters 59 to each of which the spring 58 is installed may be disposed behind the stationary cutter parts 57b of the aforesaid rear cutters 57 with each required spacing, preferably in parallel to each other at need.

Furthermore, it is preferable that the aforesaid cutter parts 56a and 57a (also the cutters 59) provided with springs 58, respectively, are divided into plural parts in order to sufficiently cope with variations of warp in the slab 52.

As a matter of course, the device according to this mode can also be applied to the case where scales on the top and bottom faces as well as both the side faces of the slab 52 are removed. In this case, it may be arranged in such that two pairs of the tool rests 54 each provided with the aforesaid respective cutters 55, 56, 57 and the like are placed opposite to one another on the top and bottom faces as well as both the side faces of the slab 52, respectively.

Moreover, since the roller table 51 for transferring
the slab 52 is rotated and controlled in normal and reverse
directions of the roller table to reciprocate the slab 52
in case of removing fused slags or scales, the tool rests each
provided with the aforesaid cutters 55, 56, 57 and the like
are disposed on the front and rear positions in the advancing
direction of the slab 52 symmetrically to each other with a
required spacing.

The present mode is composed, as set forth above,
in such that in order to cut out fused slags on a slab in
the transferring process of the slab of a prescribed
length, a <-shaped stationary front cutter shaping the front
center thereof being the inlet side for the slab as the apex;
middle cutters each consisting of a cutter part installing a
spring disposed with a required spacing from the front cutter
and lapping over with the aforesaid front cutter and each
stationary cutter part placed adjacent to the outside of the
cutter part installing a spring; and rear cutters each consisting of a cutter part installing a spring disposed similarly to
that of the aforesaid middle cutters and lapping over with the
stationary cutter part positioned before the aforesaid cutter
part one another and each stationary cutter part placed
adjacent to the outside of the aforesaid cutter part installing
a spring are provided on a tool rest being vertically movable,
respectively, and each projection level of the share point in
a cutter part installing a spring is made to be somewhat higher than that of each stationary cutter part positioned before this cutter part. Accordingly there is not such fear that fused slags extending over all the region in the width direction of the undersurface of the slab are cut out at the same time by means of these cutters, but the slab can successively be cut out every parts in accordance with the angle of sweepback of the cutters. Therefore there is not such case where large impulsive force is applied to the cutters so that the life of the same can be prolonged.

Furthermore, in the case where a slab is warped widthwise, such fused slags which could not be cut out by means of the front cutter can smoothly and positively be cut out successively in a step-by-step manner by means of cutter parts lapping over with those positioned before the same among the middle and rear cutters.

Figs. 21 - 27 are views for illustrating an embodiment of the present third invention, respectively.

First, Fig. 21 is a schematic layout showing an example of the device for embodying the present third invention in which slabs such as continuous cast pieces and the like are continuously cast by means of a continuous casting machine 8, and such slabs are continuously cut off by means of each gas cutting apparatus (not shown) in each table 9 under a torch. Each slab after cutting off the same is transferred to each of transferring tables 11 and 12 through each torch delivery table 10, and such slab is transferred in a direction indicated by an arrow B by means of each of the transferring tables 11 and 12.

Next, in these transferring tables 11 and 12, means 15a and 15b for sharing and removing fused dross are provided in order to eliminate the fused dross of the slab after it was cut off, and water cooling means 13a and 13b are disposed before and behind the sharing and removing means 15a and 15b for fused dross, respectively. Such sharing and removing means 15a and 15b for fused dross may be composed in any type of a means so far as the means is constructed in such that fused dross on the undersurface of a slab can be shared to remove the fused dross in the cut portion of the slab. In general, however, as shown in a conventional example of Fig. 1, it is sufficient if a pedestal 5 for supporting a cutter 4 for removing fused dross in the lower part of a path line is constructed so as to freely ascend and descend by means of a cylinder 6. Furthermore each of the water cooling means 13a and 13b may be constructed in any type of a means as far as the means can cool a fused dross deposited portion up to 650°C or less in the cut portion of a slab, but usually it is preferable to compose the means as shown in Figs. 22(a) and 22(b).

Namely, Figs. 22(a) and 22(b) are a side view and a planar view each showing an example of a water cooling means in which a plurality of sprinkler nozzles 14 are opposed to a cut-off portion 1a of a slab 1 transferred by means of each table roller 3 in a transferring table, and the sprinkler nozzles 14 are arranged in such that cooling water can be supplied thereto through a headder 14a. By such arrangement, the cooling water 14b is sprinkled from each sprinkler nozzles 14 so that the fused dross 2 is instantly cooled. Furthermore the respective sprinkler nozzles 14 may also be constructed in such that they are interlocked with a detecting means for a slab section (not shown), for instance, a photoelectric tube or the like, and when it is detected that a slab end face stops in place by means of the detecting means, the cooling water can be sprinkled.

In addition, as a result of various experiments in case of removing fused dross, it became clear that since a slab was in high temperatures, the fused dross could not completely be removed because of its tack resistance. In this respect, the end face of the slab on which the fused dross is deposited is cooled by sprinkling water thereonto and consequently, it has turned out that when a temperature at the slab end face is made to be 650°C or less as shown in Fig. 27, the fused dross can be substantially completely shared and removed.

Therefore, in order to completely remove such dross, when the end face of a slab on which the fused dross is deposited is cooled to a temperature of 500 - 200°C, it becomes possible to keep an end face temperature at the time of removing the dross 650°C or less, whereby the dross can completely be removed.

Then, a case where fused dross on a slab after it was subjected to gas cutting is removed will be described hereinbelow through operational modes of a device for removing fused dross constructed as described above. First, the slab 1 after completing gas cutting is transferred to the transferring table 12 by way of the tourch delivery table 10 and the transferring table 11, and the slab was stopped on the transferring table 12 in a situation shown in Fig. 23. Thereafter cooling water is jetted from each sprinkler nozzle 14 of the water cooling means 13b for around 5 - 20 seconds so that the extreme end of the slab 1 is cooled to 650°C or less. After the extreme end of the slab 1 was cooled by means of the water cooling means 13b, the slab is backwardly fed on the tables, the dross on the extreme end thereof is cut out by means of the sharing and removing means 15b, such slab is continued to be backwardly fed, and then the slab stops at a position illustrated in Fig. 24. Thereafter the slab 1 is again transferred in the direction B, the slab then stops in a condition illustrated in Fig. 25, and the rear end portion of the slab is sprinkled from the water cooling device 13a this time to effect cooling thereof. After completing the cooling of the rear end portion of the slab , the slab 1 is again transferred along the direction B, the dross on the rear end portion is removed by means of the sharing and removing means 15a, the slab comes to be in a state as illustrated in Fig. 26, and then the resulting slab is transferred to the following steps.

Since the dross portions are shared and removed after

cooling them by way of the above respective steps in the
present second invention, such dross portions can completely
be removed so that there is no trouble in the treatment of
the following steps.

If the cooling before sharing and removing of a slab
is carried out by such manner that a temperature of the slab
end face comes to be within a range of 500 - 200°C, the slab end
face at the time of removing dross may be cooled so as to keep
a temperature 650°C or less.

As described above in detail, the present third invention
relates to a method in which before fused dross on a slab
after it was subjected to gas cutting is shared and removed by
means of cutters and the like, a deposited portion of such fused
dross is cooled to make the dross portion brittle by which such
portion is easily shared, and then the sharing and removing
operations are carried out. As the result, fused dross can
completely be removed by such method as stated above. Thus,
there is not such a case where flaws and the like remain on a
product in the event where a  slab  after it was cut off is
rolled in the following step, besides there is no need of
detection for existence of fused dross in its transferring step,
and there is also no fear of arising any trouble in the other
processes.

## INDUSTRIAL APPLICABILITY

As mentioned above, the device for removing fused slags on   slabs according to the present invention is suitable for the installation in steps for processing  slabs in an ironwarks as a device for cutting off and removing fused slags on a  slab  which is obtained by fusing a strip steel stock fed from continuous casting facilities and the like with a prescribed length by means of a torch or the like.

CLAIMS

1. A device for removing fused slags on slabs, characterized in that at the lower part being an optional position between rollers of a roller table for transferring a slab of a prescribed length, a cutter mount being vertically moved and rotatively controlled is transversely carried perpendicularly to said transferring roller table; and cutters for cutting out fused slags on said slab are disposed on the outer surfaces of said cutter mount being in at least cymmetrical positions along the longitudinal direction thereof.

2. A device for removing fused slags on slabs as claimed in Claim I, characterized by providing a constraint means for restricting rotation of said cutter mount at the time of cutting out the fused slags and engaging with the outer surfaces of the opposite ends of said cutter mount at a raised position thereof.

3. A device for removing fused slags on slabs as claimed in Claim 1, characterized in that said cutter mount is formed so as to have a square section, and a pair of cutters each having a share point of an inverse profile with respect to that of another pair of cutters are disposed on the opposite outer surfaces of said square section, respectively, whilst said other pair of cutters are disposed on the residual opposite outer surfaces of said square section.

4. A device for removing fused slags on slabs, characterized in that a plurality of cutters are successively arranged on a tool rest being vertically movable in such that they diverge from the front center being the inlet side for a slab towards the rear opposite sides of said tool rest; each projection level of said cutters is made to be gradually higher as they proceed towards the rear part of said tool rest; and at the same time, each cutter is held by means of a spring positioned below with respect to said tool rest in order to cut out the fused slags on said slab in the transferring process of the slab of a prescribed length.

5. A device for removing fused slags on slabs , characterized in that ⟨-shaped cutters each shaping the front center thereof being the inlet side for a slab as the apex are disposed on the front and rear positions of a tool rest being vertically movable with a required spacing, respectively; at least the rear cutter is maintained through a spring mounted at the lower position with respect to said tool rest; and at the same time the projection level of the share point in said rear cutter is made to be somewhat higher than that of the front cutter in order to cut out the fused slags on said slab in the transferring process of the slab of a prescribed length.

6. A device for removing fused slags on slabs as claimed in Claim 5, characterized in that said rear cutter is divided into plural parts, and a spring is interposed between the undersurface of each cutter part thus divided and said tool rest.

7. A device for removing fused slags on slabs as claimed in Claim 5, characterized in that said rear cutter is divided into plural parts, at the same time, the cutter parts so divided are arranged in such that they are successively shifted rearwardly from that positioned innermost to those positioned outermost, and a spring is interposed between the undersurface of each cutter part divided and said tool rest.

8. A device for removing fused slags on slabs , characterized in that a ⟨-shaped stationary front cutter shaping the front center thereof being the inlet side for a slab as the apex; middle cutters each consisting of a cutter part installing a spring disposed with a required spacing from said front cutter and lapping over with said front cutter and each stationary cutter part placed adjacent to the outside of said cutter part installing a spring; and rear cutters each consisting of a cutter part installing a spring disposed similarly to that of said middle cutters and lapping over with the stationary cutter part positioned before said cutter part one another and each stationary cutter part placed adjacent to the outside of said cutter part installing a spring are provided on a tool rest being vertically movable, respectively; and each projection level of the share point in a cutter part installing a spring is made to be somewhat higher than that of each stationary cutter part positioned before the very cutter part in order to cut out the fused slags on said slab in the transferring process of the slab of a prescribed length.

9. A method for removing fused dross on slabs, characterized by subjecting a slab such as a continuously cast slab or the like to continuous gas cutting on a hot slab transferring table; thereafter water-cooling a deposited portion of the fused dross on the undersurface of said slab in the cut-off portion thereof; adjusting a temperature at the end face of said slab in said deposited portion of the fused dross to 650°C or less; and then sharing and removing said fused dross.

10. A device for removing fused dross on slabs, characterized in that a gas cutting means for subjecting a slab such as a continuously cast slab or the like to continuous gas cutting on a hot slab transferring table line is followed by a sharing and removing means of fused dross for cutting out the fused dross deposited on the undersurface of said slab in the cut-off portion thereof; and water-cooling means for water-cooling said deposited portion of the fused dross on said slab are disposed before and behind said sharing and removing means of fused dross, respectively, whereby said device is arranged in such that said fused dross is shared and removed by means of said sharing and removing means.

0064083

# FIG.1

# FIG.2

# FIG.3

# FIG.4

F I G . 5

14a
14a      14
14a
14a

F I G . 6

14
14a      14a
14a

F I G . 7

14
14a

F I G . 8

14a
14a      14
14a

F I G . 9

14a
14
14b      14b
14a

F I G .10

F I G .11

F I G .12

F I G .13

F I G .14

# F I G . 15

# F I G . 16

# F I G . 17

# F I G . 18

# F I G. 19

# F I G. 21

# F I G. 20

# F I G. 22

(a)

(b)

0064083

# FIG.23

# FIG.24

# FIG.25

# FIG.26

# FIG.27

International Application No. PCT/JP81/00348 0064083

**FURTHER INFORMATION CONTINUED FROM THE SECOND SHEET**

"Y"  docuemnt of particular relevance; the claimed
invention cannot be considered to involve an
inventive step when the document is combined
with one or more other such documents, such
combination being obvious to a person skilled
in the art

---

**V.☐ OBSERVATIONS WHERE CERTAIN CLAIMS WERE FOUND UNSEARCHABLE [10]**

This international search report has not been established in respect of certain claims under Article 17(2) (a) for the following reasons:

1.☐ Claim numbers........ ......., because they relate to subject matter [12] not required to be searched by this Authority, namely:

2.☐ Claim numbers............., because they relate to parts of the international application that do not comply with the prescribed require-
ments to such an extent that no meaningful international search can be carried out [13], specifically:

---

**VI.☐ OBSERVATIONS WHERE UNITY OF INVENTION IS LACKING [11]**

This International Searching Authority found multiple inventions in this international application as follows:

1.☐ As all required additional search fees were timely paid by the applicant, this international search report covers all searchable claims
of the international application.

2.☐ As only some of the required additional search fees were timely paid by the applicant, this international search report covers only
those claims of the international application for which fees were paid, specifically claims:

3.☐ No required additional search fees were timely paid by the applicant. Consequently, this international search report is restricted to
the invention first mentioned in the claims; it is covered by claim numbers:

Remark on Protest

☐ The additional search fees were accompanied by applicant's protest.

☐ No protest accompanied the payment of additional search fees.

---

Form PCT/ISA/210 (supplemental sheet (2)) (October 1977)

# INTERNATIONAL SEARCH REPOR

International Application N° PCT/JP81/00326

## I. CLASSIFICATION OF SUBJECT MATTER (if several classification symbols apply, indicate all)

According to International Patent Classification (IPC) or to both National Classification and IPC

Int.Cl³  B22D 11/126, B23D 1/22, B23K 7/10

## II FIELDS SEARCHED

### Minimum Documentation Searched

| Classification System | Classification Symbols |
|---|---|
| I P C | B22D 11/126, B23D 1/22, B23D 35/00, B23K 7/10 |

### Documentation Searched other than Minimum Documentation to the Extent that such Documents are Included in the Fields Searched

| | |
|---|---|
| Jitsuyo Shinan Koho | 1962 - 1981 |
| Kokai Jitsuyo Shinan Koho | 1972 - 1981 |

## III. DOCUMENTS CONSIDERED TO BE RELEVANT

| Category | Citation of Document, with indication, where appropriate, of the relevant passages | Relevant to Claim No. |
|---|---|---|
| A | JP,U, 54-84330 (Sumitomo Metal Industries, Ltd.). 14, June, 1979 (14.6.79) | 1 - 3 |
| A | JP,U, 53-117542 (Kawasaki Steel Corp.) 19, September, 1978 (19.9.78) | 1 - 3 |
| A | JP,B2, 53-29859 (Tai Yoshiaki) 23, August, 1978 (23.8.78) | 1 - 3 |
| X | JP,A, 51-84755 (Ishikawajima-Harima Heavy Industries Co., Ltd.) 24, July, 1976 (24.7.76) | 4 - 8 |
| Y | JP,U, 53-93511 (Nippon Steel Corp.) 31, July, 1978 (31. 7. 78) | 4 - 8 |
| A | JP,A, 52-138459 (Nippon Steel Corp., Taihei Kogyo Kabushiki Kaisha) 18, November, 1977 (18.11.77) | 9 - 10 |
| A | JP,A, 53-116255 (Tanaka Seisakusho Kabushiki Kaisha) 11, October, 1978 (11.10.78) | 9 - 10 |
| | "X" document of particular relevance; the claimed invention cannot be considered novel or cannot be considered to involve an inventive step. | |

* Special categories of cited documents:

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

## IV. CERTIFICATION

| Date of the Actual Completion of the International Search | Date of Mailing of this International Search Report |
|---|---|
| January 28, 1982 (28.1.82) | February 22, 1982 (22.02.82) |

| International Searching Authority | Signature of Authorized Officer |
|---|---|
| Japanese Patent Office | |

Form PCT/ISA/210 (second sheet) (October 1977)